# EUROPÄISCHE PATENTSCHRIFT

(11) **EP 2 433 481 B1**
(45) Veröffentlichungstag und Bekanntmachung des Hinweises auf die Patenterteilung: **31.12.2014**
(21) Anmeldenummer: 11006637.0
(22) Anmeldetag: 12.08.2011
(51) Int. Cl.: A01B 29/04

(54) **Walzenförmige Vorrichtung zur Bodenbearbeitung**
Roller-shaped device for soil cultivation
Dispositif en forme de cylindre pour le traitement du sol

(30) Priorität: 22.09.2010 DE 202010013512 U
(43) Veröffentlichungstag der Anmeldung: 28.03.2012
(73) Patentinhaber: Hendlmeier, Konrad, 93107 Untersanding (DE)
(72) Erfinder: Hendlmeier, Konrad, 93107 Untersanding (DE)
(74) Vertreter: Graf Glück Kritzenberger

(56) Entgegenhaltungen:
- EP-A1- 1 038 423
- EP-A1- 2 210 459
- EP-A1- 2 386 197
- DE-U1- 20 317 147
- DE-U1-202008 014 705

## Beschreibung

Die Erfindung betrifft eine walzenförmige Vorrichtung zur Bodenbearbeitung gemäß dem Oberbegriff des Patentanspruches 1.

Walzenförmige Vorrichtungen für Bodenbearbeitungsvorgänge, insbesondere Sävorgänge und/oder zum Verfestigen von Boden nach einem Sävorgang mit Hilfe von rotierenden Stempelwerkzeugen, die auf einem horizontal angeordneten Nabenrohr parallel zueinander montiert sind, sind bereits hinreichend aus dem Stand der Technik offenbart.

Beispielsweise ist aus der EP 1 038 423 A1 eine Vorrichtung zum Verfestigen des Bodens bei Bodenbearbeitungs- und/oder Sävorgängen bekannt, welche walzen- oder radförmige Stempelwerkzeuge aufweist, die auf einer horizontalen Achse umlaufend angeordnet sind. Die Stempelwerkzeuge weisen radial nach außen gerichtete Stempelelemente auf, welches als einseitig mit der Achse befestigte sichelförmige Elemente bzw. abgewinkelte Federarme ausgebildet sind. Nachteilig sind derartige Stempelelemente relativ aufwendig herstellbar und daher äußerst kostenintensiv.

Die EP 2 210 459 A1 offenbart eine walzenförmige Bodenbearbeitungsvorrichtung zum Verfestigen des Bodens bei Bodenbearbeitungs- und/oder Sävorgängen mit Hilfe von rotierenden Bodenbearbeitungswerkzeugen, die auf einer horizontalen Nabenanordnung parallel zueinander befestigt sind. Hierbei sind die Bodenbearbeitungswerkzeuge als geschlossne Ringelemente ausgebildet, die über mehrere Speichen mit dem Nabenrohr befestigt sind, und zwar derart, dass das innere Speichenende fest mit dem Nabenrohr und das äußere Speichenende beweglich mit dem Ringelement verbunden sind. Aufgrund dieser radial beweglichen Verbindung am äußeren Speichenende, vorzugsweise in Form eines gabelartigen Kopfteils, ist eine Deformation des Ringelementes zumindest in radialer Richtung möglich. Nachteilig erfordert die gabelartige Ausbildung des Kopfteils des äußeren Speichenendes jedoch einen erhöhten Fertigungs- und Montageaufwand.

Aus der DE 20 2008 014 705 U1 ist eine Vorrichtung zum Vorbereiten des Bodens zum Säen und zum Ausbringen von Saatgut benannt, die rotierende Räumwerkzeuge in Form von Stempelwerkzeugen einer Stempelwalze aufweist. Das Stempelwerkzeug ist aus einzelnen, voneinander beabstandeten Ringen oder Rädern auf einer durchgehenden, quer zur Arbeitsrichtung angeordneten Drehachse gebildet, wobei die Ringe bzw. Räder eine geschlossene oder teilweise unterbrochende walzenförmige Umfangsfläche bilden. Besteht das Rad aus einem geschlossenen Umfangsring, dann weist dieses vier Speichen auf, wobei jeweils das radial äußere Ende einer Speiche mit dem Umfangsring und das radial innere Ende einer Speiche mit der Drehachse fest verbunden, vorzugsweise verschweißt sind. Die radial äußeren Enden einer Speiche erstrecken sich über den Umfangsring hinaus, d.h. Durchdringen diesen in radialer Richtung nach außen und bilden somit radiale Verlängerungen aus, die als zackenartigen Werkzeuge in das Erdreich eindringen können und einerseits zur Bodenlockerung und anderseits zum Bodenantrieb der Räder beitragen.

Ausgehend vom vorliegenden Stand der Technik liegt der Erfindung daher die Aufgabe zugrunde, ein vereinfacht herstellbares und damit kostengünstiges Bodenbearbeitungswerkzeug vorzuschlagen, welches eine effektive Bodenverdichtung ermöglicht. Die Aufgabe wird ausgehend von den Merkmalen des Oberbegriffs des Patentanspruches 1 durch dessen kennzeichnende Merkmale gelöst.

Der wesentliche Aspekt der Erfindung ist darin zu sehen, dass jeweils ein Ringelement über zwei oder drei Speichen mit einem inneren und äußeren radialen Ende mit dem Nabenrohr verbunden ist, wobei zumindest das radial äußere Ende einer Speiche starr mit dem Ringelement verbunden ist, und zwar sind das radial äußere Ende einer Speiche und das Ringelement mittels einer Schraub- und/oder Laschenverbindung miteinander verbunden. Besonders vorteilhaft ist durch die Ausbildung des Bodenbearbeitungswerkzeuges in Form eines geschlossenen, zumindest in seiner Ringelementebene deformierbar ausgebildeten Ringelementes mit kontinuierlicher Umfangsfläche und die starre Anbindung über zwei oder drei Speichen an dem Ringelement das Bodenbearbeitungswerkzeug im Ringelementabschnitt zwischen zwei aufeinander folgenden Speichen radial auslenkbar und ermöglicht dadurch eine besonders effektive Bodenverdichtung. Durch eine entsprechende Dimensionierung, insbesondere des Durchmessers des Ringelementes sowie die Wahl der Anzahl der zur Befestigung des Ringelementes am Nabenrohr vorgesehenen Speichen ist besonders vorteilhaft der Deformationsgrad des Bodenbearbeitungswerkzeuges in radialer Richtung einstellbar.

Weiterhin vorteilhaft ist das radial innere freie Ende einer Speiche starr mit dem Nabenrohr verbunden, Beispielsweise kann das radial innere freie Ende einer Speiche mit der Außenseite des Nabenrohres verschweißt oder in sonstiger Weise starr verbunden sein, so dass zwischen dem Ringelement und dem Nabenrohr eine in radialer und horizontaler Hinsicht steife Verbindung besteht.

Alternativ kann das radial innere freie Ende einer Speiche starr mit einer länglichen Führungshülse verbunden sein, welche das Nabenrohr umschließt, wobei die Führungshülse horizontal verschiebbar auf dem Nabenrohr angeordnet ist. Weiterhin vorteilhaft ist die längliche Führungshülse mit dem Nabenrohr derart verbunden, dass die längliche Führungshülse (entlang der Längsachse des Nabenrohres) verschiebbar ist, jedoch ein axiales Verdrehen der Führungshülse um die Nabenrohrlängsachse gesperrt ist. Hierbei Überschreiten die Innenabmessungen der Führungshülse deutlich die Außenabmessungen des Nabenrohres, so dass ein ausreichender Abstand zwischen der Innenfläche der Führungshülse und der Außenfläche des Nabenrohres besteht, der neben der horizontalen Verschiebbarkeit des Bodenbearbeitungswerkzeuges auch zumindest im geringen Umfang eine Beweglichkeit in radialer Hinsicht ermöglicht.

Das Ringelement ist vorzugsweise aus einem flachen Federmetallstreifen hergestellt. Beispielsweise besteht das Ringelement aus einem Flachstahlband, dass zu einen Ring geformt ist und dessen beide freien Enden miteinander verbunden, z.B. verschweißt sind. Dies ist vorzugsweise derart ausgeführt, dass die beiden freien Enden des Stahlbandes einander überlappen und durch eine Schraubverbindung oder mit Hilfe einer Überbrückungsvorrichtung, z.B. einer Lasche, miteinander zu einem Ring verbunden sind.

Das Ringelement wird durch die zwei oder drei Speichen in mehrere Ringelementabschnitte geteilt, die quer zur Ringelementebene radial auslenkbar sind, wobei ein Ringelement mittels zwei oder drei Speichen mit dem Nabenrohr verbunden ist. Die Speichen weisen hierbei jeweils denselben Winkelabstand zueinander auf.

Auch können zumindest zwei auf einem Nabenrohr angeordnete Ringelemente eine unterschiedliche Anzahl an Speichen aufweisen. Im Ruhezustand und bei geringer Beanspruchung behält aufgrund der festen Verbindung zwischen Ringelement und Nabenrohr das Bodenbearbeitungswerkzeug im Wesentlichen seine Kreisform. Bei höherer Beanspruchung und bei stärkerem Eingriff mit dem Boden bzw. Unstetigkeiten im oder auf dem Boden kann das erfindungsgemäße Bodenbearbeitungswerkzeug in den Ringelementabschnitten zwischen den Speichen in begrenztem Umfang deformiert werden, so dass an dieser Eingriffstelle des Ringelementes vorübergehend eine Abflachung bzw. Abweichung von der Ringform und bei Verlassen des Bodeneingriffes aufgrund der Nachgiebigkeit wieder eine Rückführung in die Kreisform stattfinden kann. Auf diese Weise führen aufeinanderfolgende Ringelementabschnitte insgesamt eine walkende bzw. oszillierende Bewegung aus. Hierbei wird der radiale Abstand des deformierten Ringelementabschnittes zur Oberfläche des Nabenrohres kleiner.

Besonders vorteilhaft wird der Durchmesser der Ringelemente abhängig von der Anzahl der Speichen gewählt, und zwar vorzugsweise im Bereich von 350 mm bis 1000 mm.

Ein Ringelement weist einen vorzugsweise massiven rechteckförmigen Querschnitt, oder einen ellipsenförmigen Querschnitt, oder einen ovalen Querschnitt.

Die Erfindung soll nachfolgend anhand von Ausführungsbeispielen im Zusammenhang mit den Figuren näher erläutert werden. Zudem ergeben sich Weiterbildungen, Vorteile und Anwendungsmöglichkeiten der Erfindung auch aus der nachfolgenden Beschreibung der Ausführungsbeispiele und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht. Es wird aber ausdrücklich darauf hingewiesen, dass die Erfindung keinesfalls auf die angegebenen Beispiele beschränkt sein soll. Es zeigen
- Fig. 1: eine schematische Seitenansicht einer erfindungsgemäßen Bodenbearbeitungsvorrichtung,
- Fig. 2: eine schematische Draufsicht auf eine erfindungsgemäße Bodenbearbeitungsvorrichtung ,
- Fig. 3: eine Seitenansicht einer ersten Ausführungsform eines erfindungsgemäßen Bodenbearbeitungswerkzeugs,
- Fig. 4: eine Seitenansicht einer zweiten Ausführungsform eines erfindungsgemäßen Bodenbearbeitungswerkzeugs,
- Fig. 5: eine Seitenansicht einer dritten Ausführungsform eines erfindungsgemäßen Bodenbearbeitungswerkzeugs,
- Fig. 6: eine Seitenansicht einer vierten Ausführungsform eines erfindungsgemäßen Bodenbearbeitungswerkzeugs,
- Fig. 7: eine Ausschnittsdarstellung des Überlappungsbereiches der freien Enden des Ringelementes,
- Fig. 8: eine Schnittdarstellung durch den oberen Abschnitt eines Bodenbearbeitungswerkzeugs in einer Ebene senkrecht zur Ringelementebene bei Verbindung der Speiche mittels einer einseitigen bzw. doppelseitigen Flansch-/Schraubverbindung,
- Fig. 9a: einen Schnitt entlang der Ringelementebene durch den oberen Abschnitt eines Bodenbearbeitungswerkzeug bei Verbindung der Speiche mittels einer einseitigen Flansch-/Schraubverbindung,
- Fig. 9b: einen Schnitt entlang der Ringelementebene durch den oberen Abschnitt eines Bodenbearbeitungswerkzeug bei Verbindung der Speiche mittels einer doppelseitigen Flansch-/Schraubverbindung,
- Fig. 10: eine Schnittdarstellung durch den oberen Abschnitt eines Bodenbearbeitungswerkzeugs in einer Ebene senkrecht zur Ringelementebene bei Verbindung mittels einer alternativen einseitigen bzw. doppelseitigen Flansch-/Schraubverbindung,
- Fig. 11 a: einen Schnitt entlang der Ringelementebene durch den oberen Abschnitt eines Bodenbearbeitungswerkzeug bei Verbindung der Speiche mittels einer alternativen einseitigen Flansch-/Schraubverbindung,

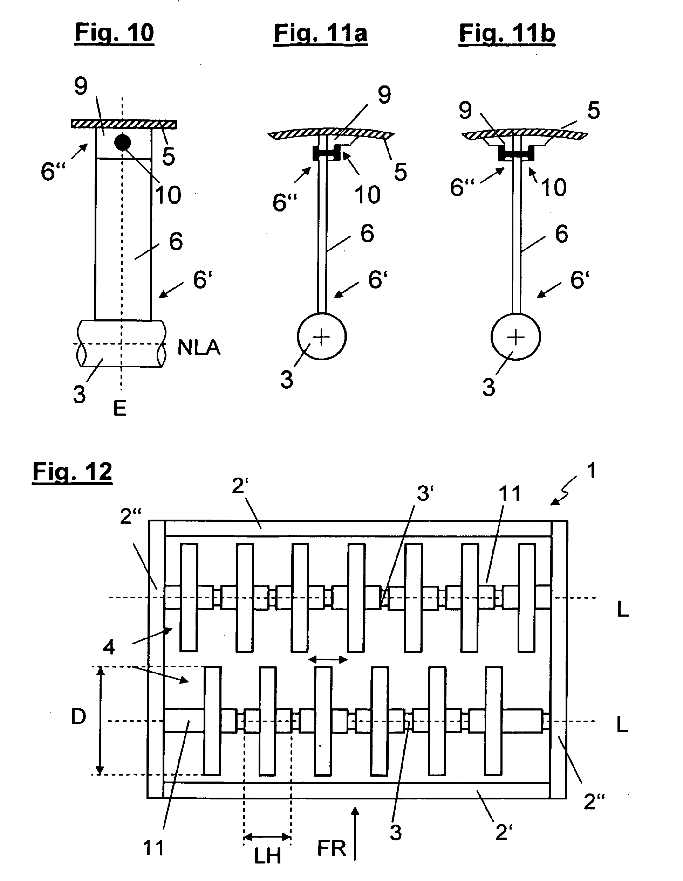

- Fig. 11 b: einen Schnitt entlang der Ringelementebene durch den oberen Abschnitt eines Bodenbearbeitungswerkzeug bei Verbindung der Speiche mittels einer alternativen doppelseitigen Flansch-/Schraubverbindung,
- Fig. 12: eine schematische Draufsicht auf eine erfindungsgemäße Bodenbearbeitungsvorrichtung mit horizontal verschiebbar angeordneten Bodenbearbeitungswerkzeugen.

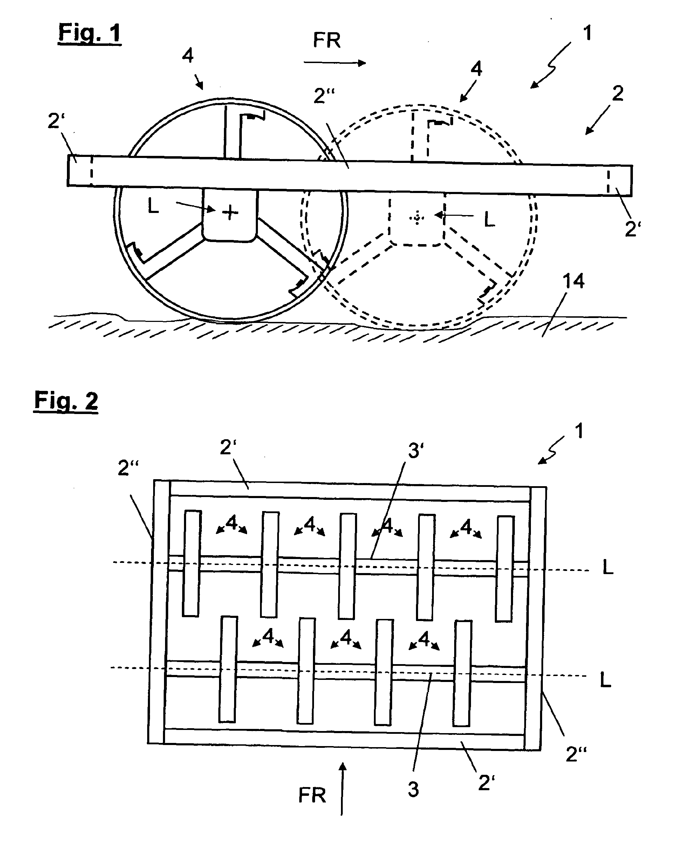

In den Fig. 1 und 2 ist in einer schematischen Seitenansicht bzw. Draufsicht eine erfindungsgemäße walzenförmige Vorrichtung 1 zur Bodenbearbeitung dargestellt. Die genannte Bodenbearbeitungsvorrichtung 1 ist vorzugsweise Teil eines Bodenbearbeitungsgerätes oder einer Sämaschine, welche rückseitig an einem Zugfahrzeug montierbar ist und zur Verwendung in einer Fahrtrichtung FR ausgelegt ist.

Die Bodenbearbeitungsvorrichtung 1 umfasst beispielsweise zumindest eine Trägerrahmenanordnung 2, welche aus mehreren Längsträgern 2' und mehreren Querträgern 2" besteht. Die Trägerrahmenanordnung 2 ist zur Aufnahme zumindest eines horizontal verlaufenden Nabenrohres 3 ausgebildet, welches auf einer - nicht in den Figuren dargestellten - Welle um eine Drehachse L drehbar gelagert ist. Hierbei erstreckt sich die Drehachse L des horizontal verlaufenden Nabenrohres 3 quer zur Fahrtrichtung FR. Auf dem Nabenrohr 3 sind mehrere rotierende Bodenbearbeitungswerkzeuge 4 jeweils vorzugsweise parallel zueinander angeordnet, wobei ein Bodenbearbeitungswerkzeug 4 durch ein geschlossenes, zumindest in einer Ringelementebene E deformierbar ausgebildetes Ringelement 5 mit kontinuierlicher Umfangsfläche 5' gebildet ist.

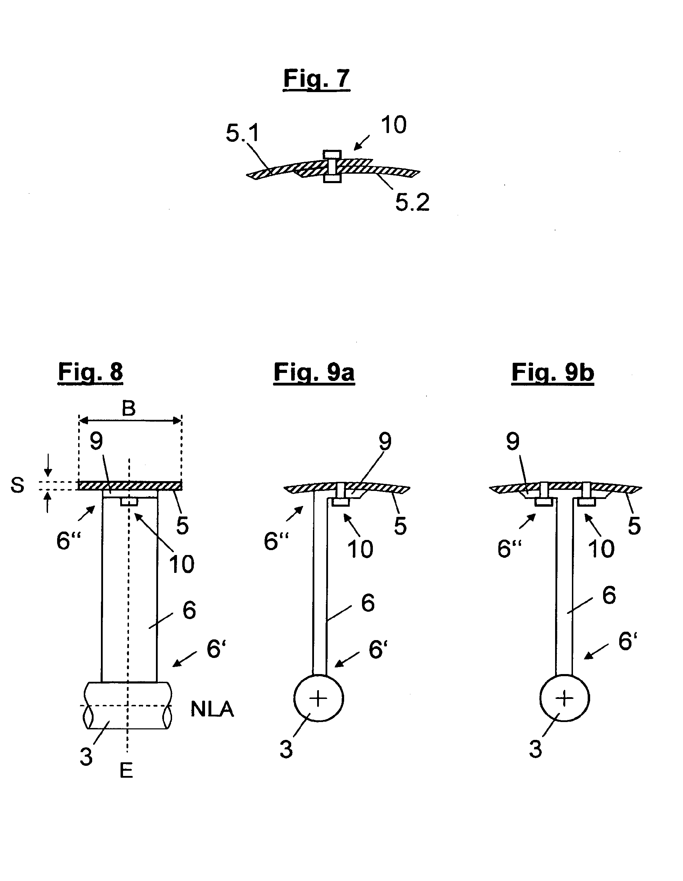

Das Ringelement 5 ist vorzugsweise aus einem flachen Federmetallstreifen, insbesondere einem Flachfederstahlband hergestellt, das eine geschlossene Umfangsfläche 5' bildet. Hierzu wird das Flachfederstahlband zu einem vorzugsweise kreisförmigen Ring gebogen und dessen freie Enden 5.1, 5.2 beispielsweise miteinander verschweißt. Anstelle einer derartigen Schweißverbindung kann, wie in Fig. 7 dargestellt, eine Schraubverbindung der beiden freien, sich überlappenden Enden 5.1, 5.2 vorgesehen sein, so dass auf eine relativ komplizierte Verschweißung des Flachfederstahlbandes verzichtet werden kann. Hierbei überlappen die freien Enden 5.1, 5.2 zumindest teilweise und werden mittels der Schraubverbindung miteinander verbunden. Alternativ kann eine Laschenverbindung bzw. Laschen- und/oder Schraubverbindung vorgesehen sein.

Die Bodenbearbeitungswerkzeuge 4 bzw. Ringelemente 5 sind einzeln oder in ihrer Gesamtheit auf einem gemeinsamen oder in Abschnitte unterteilten Nabenrohr 3, und zwar jeweils mittels zumindest zweier Speichen 6 - 8 befestigt. Die Speichen 6 - 8 verlaufen ausgehend vom Nabenrohr 3 radial nach außen und stellen erfindungsgemäß eine feste Verbindung zwischen dem jeweiligen Ringelement 5 und dem Nabenrohr 3 her.

Eine Speiche 6 - 8 weist jeweils ein radial inneres Ende 6', 7', 8' und ein radial äußeres Ende 6", 7", 8" auf, wobei das radial innere Ende 6', 7', 8' in einer ersten Ausführungsform mit dem Nabenrohr 3 starr verbunden ist, vorzugsweise verschweißt, ist und das radial äußere Ende 6", 7", 8" jeweils starr mit der Innenfläche 5" des Ringelementes 5 verbunden ist, und zwar mittels einer Schraub- und/oder Laschenverbindung. Ausführungsformen derartiger Verbindungen werden nachfolgend anhand der Figuren 8, 9a,b und 10, 11a,b beschrieben.

Die erfindungsgemäßen Bodenbearbeitungswerkzeuge 4 weisen vorzugsweise zwei, oder drei Speichen 6, 7, 8 auf. Vorzugsweise besitzen die an einem Nabenrohr 3 angeordneten Speichen 6, 7, 8 jeweils dieselbe Anzahl an Speichen 6, 7, 8. Auch können zumindest zwei an dem Nabenrohr 3 befestigte Ringelemente 5 eine unterschiedliche Anzahl an Speichen 6, 7, 8 aufweisen, wobei Ringelemente 5 mit unterschiedlicher Anzahl an Speichen 6, 7, 8 vorzugsweise abwechselnd auf dem Nabenrohr 3 angeordnet sind. Die Speichen 6, 7, 8 können abhängig vom jeweiligen Anwendungsfall die gleiche oder eine unterschiedliche radiale Länge aufweisen.

Beim Einsatz von zwei oder mehreren Nabenrohren 3, 3', welche parallel zueinander horizontal in der Trägerrahmenanordnung 2 aufgenommen sind, werden die auf dem Nabenrohren 3, 3' befindlichen Ringelemente 5 vorzugsweise auf Lücke zueinander angeordnet. Auch können die Ringelemente 5 zumindest teilweise überlappend angeordnet sein, so dass in dem Zwischenraum zwischen zwei Ringelementen 5 des einen Nabenrohres 3 zumindest ein Ringelement 5 des nachfolgenden anderen Nabenrohres 3' zumindest teilweise eingreift.

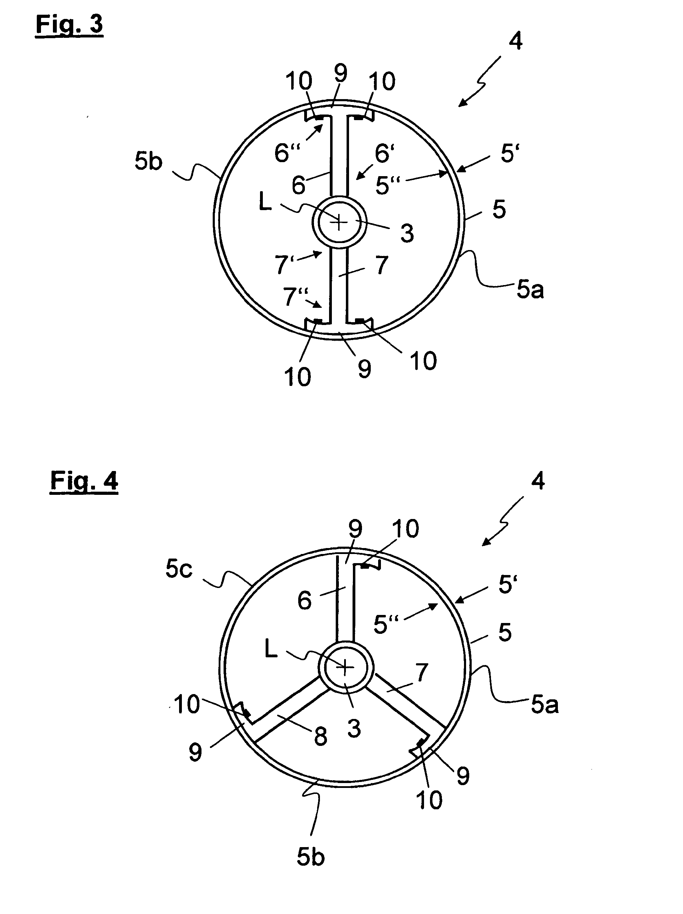

Figur 3 zeigt beispielhaft eine erste Ausführungsform eines Bodenbearbeitungswerkzeuges 4 mit einem Ringelement 5, welches über eine erste und zweite Speiche 6, 7 mit einem Nabenrohr 3 fest verbunden ist. Die äußeren freien Enden 6", 7" der ersten und zweiten Speichen 6, 7 weisen jeweils einen doppelseitigen Anschlussflansch 9 auf, wobei jede Seite des doppelseitigen Anschlussflansches 9 über eine Schraubverbindung 10 mit dem Ringelement 5 verbunden ist. Hierzu kann beispielsweise eine entsprechende Ausnehmung oder Durchgangsbohrung mit Innengewinde in das Ringelement 5 eingebracht werden. Die erste und zweite Speiche 6, 7 sind vorzugsweise um 180° versetzt zueinander angeordnet und teilen das im beispielsweise kreisförmige Ringelement 5 in zwei halbkreisförmige Ringabschnitte 5a, 5b auf. Aufgrund der festen Verbindung mittels der ersten und zweiten Speichen 6, 7 sind die beiden Ringabschnitte 5a, 5b deformierbar ausgebildet, so dass bei einer Beanspruchung eines Ringabschnittes 5a, 5b durch Bodenunstetigkeiten dieser radial entlang der Ringelementebene E auslenken kann.

Durch eine entsprechende Dimensionierung des Durchmessers D des Ringelementes 5, und zwar abhängig von der Anzahl der zur Befestigung des Ringelementes 5 am Nabenrohr 3 vorgesehenen Speichen 6, 7, 8 ist besonders vorteilhaft der Deformationsgrad des Bodenbearbeitungswerkzeuges 4 in radialer Richtung einstellbar. Auch kann durch die Dimensionierung des zur Herstellung des Ringelementes 4 verwendeten Flachfederstahlbandes der Deformationsgrad des Ringelementes 5 beeinflusst werden. Beispielsweise beträgt der Durchmesser D des Ringelementes 5 zwischen 350 mm und 1000 mm. Bei Verwendung von zwei Speichen 6, 7 wird der Durchmesser D im Bereich zwischen 350 mm und 550 mm gewählt, wohingegen beim Einsatz von drei Speichen 6, 7, 8 der Durchmesser D zwischen 500 mm und 1000 mm, vorzugsweise 500 mm und 750 mm gewählt wird. Die Breite B des Flachfederstahlbandes beträgt beispielsweise ca. 50 bis 80 mm und weist eine Stärke S von ca. 8 bis 15 mm auf. Das Ringelement 5 hat wahlweise einen massiven rechteckförmigen Querschnitt, einen ellipsenförmigen Querschnitt, einen ovalen Querschnitt, einen dachförmigen oder T-förmigen Querschnitt.

Figur 4 zeigt beispielhaft eine Ausführungsform eines erfindungsgemäßen Bodenbearbeitungswerkzeuges 4 mit einem Ringelement 5, welches über eine erste, zweite und dritte Speiche 6, 7, 8 mit einem Nabenrohr 3 fest verbunden ist. Die Befestigung der äußere freien Enden 6", 7", 8" der ersten bis dritten Speiche 6, 7, 8 erfolgt mittels eines einseitigen Anschlussflansches 9 und einer Schraubverbindung 10. Die erste bis dritte Speiche 6, 7, 8 sind vorzugsweise jeweils um 120° versetzt zueinander angeordnet und teilen den Umfang des kreisförmigen Ringelementes 5 in drei gleichlange Ringabschnitte 5a, 5b, 5c auf.

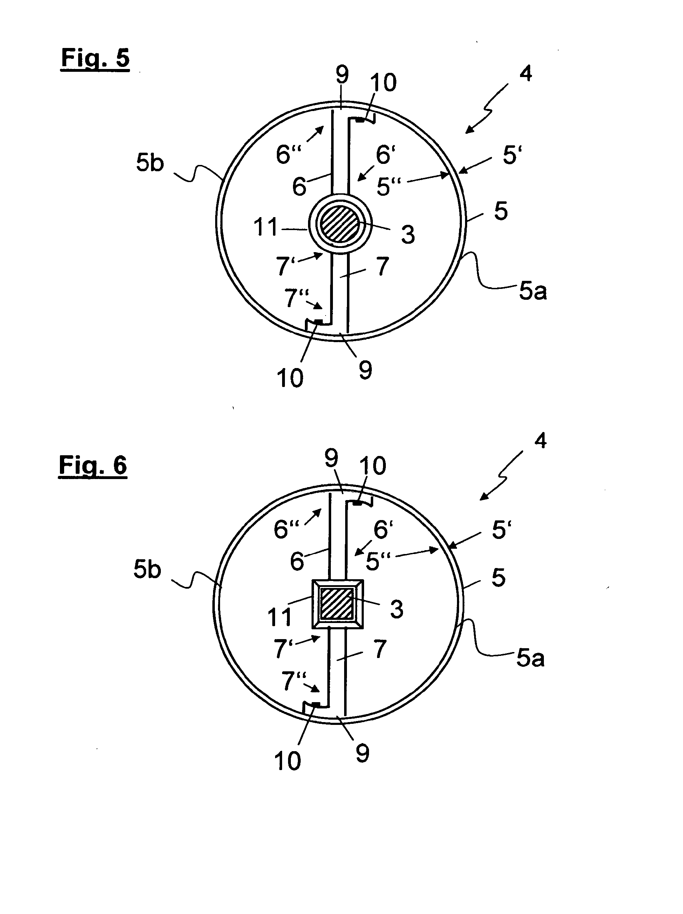

In einer zweiten Ausführungsvariante der erfindungsgemäßen Bodenbearbeitungsvorrichtung 1 gemäß der Figuren 5, 6 und 12 sind die Ringelemente 5 über eine längliche Führungshülse 11 mit dem Nabenrohr 3 derart verbunden, dass die längliche Führungshülse 11 das Nabenrohr 3 umschließt und auf diesem entlang der Längsachse NLA des Nabenrohres 3 verschiebbar ist. Hierzu ist das radial innere Ende 6', 7', 8' der jeweiligen Speiche 6, 7, 8 mit der Führungshülse 11 fest verbunden. In einer bevorzugten Ausführungsform ist ein axiales Verdrehen der Führungshülse 11 um die Nabenrohrlängsachse N LA gesperrt. Die Sperrung des axialen Verdrehens der Führungshülse 11 um die Nabenrohrlängsachse NLA wird entweder durch einen Formschluss zwischen der Führungshülse 11 und dem Nabenrohr 3 oder das Vorsehen entsprechender Sperrmittel erreicht. Beispielsweise können die Führungshülse 11 und das Nabenrohr 3 zur Herstellung eines Formschlusses einen von der Kreisform abweichenden Querschnitt, beispielsweise einen dreieck- oder rechteckförmigen, ovalen oder quadratischen Querschnitt aufweisen.

In Figur 5 und 6 ist beispielsweise ein Bodenbearbeitungswerkzeug 4 mit einer Führungshülse 11 mit kreisförmigem bzw. quadratischem Querschnitt dargestellt, welche auf einem ebenfalls im Querschnitt kreisförmigen bzw. quadratischen Nabenrohr 3 geführt ist. Hierbei besteht zwischen der Innenfläche 12 der Führungshülse 11 und der Außenfläche 13 des Nabenrohres 3 ein ausreichender Zwischenraum, damit ein horizontales Verschieben der Führungshülse 11 entlang der Nabenrohrlängsachse NLA möglich ist. Die Länge LH der Führungshülsen 11 beträgt zumindest das Dreifache der Breite des Ringelementes 5, wobei mittels der Länge LH der Führungsabstand 11 der horizontale Abstand zwischen zwei benachbarten Ringelementen 5 einstellbar ist. Beispielsweise beträgt die Hülsenlänge LH zwischen 180 mm und 250 mm.

Vorzugsweise sind die Bodenbearbeitungswerkzeuge 4 derart auf dem Nabenrohr 3 nebeneinander angeordnet, dass die gegenüberliegenden freien Enden 11', 11" der Führungshülsen 1 zweier benachbarter Ringelementen 5 beabstandet zueinander sind, wodurch eine horizontal "schwimmende" Anordnung der Bodenbearbeitungswerkzeuge 4 auf dem jeweiligen Nabenrohr 3 erreicht wird. Beispielsweise beträgt der Abstand der freien Enden 11', 11 " der Führungshülsen 11 zweier benachbarter Ringelemente 5 zwischen 20 mm und 50 mm.

In den Figuren 8, 9a, 9b und 10, 11a und 11b und sind beispielhaft unterschiedliche Ausführungsformen einer einseitigen und doppelseitigen Laschenverbindung bzw. einer einseitigen und doppelseitigen Laschenklemmverbindung dargestellt. Die jeweiligen Anschlusslaschen 9 sind entweder einstückig mit der Speiche 6, 7, 8 ausgebildet oder mit dem Ringelement 5 fest verbunden, vorzugsweise verschweißt, wobei jeweils zumindest eine Sicherung mittels einer Schraubverbindung 10 erfolgt.

Die erfindungsgemäße Bodenbearbeitungsvorrichtung 1 ermöglicht eine effektive Bodenverdichtung, und zwar wird durch den jeweils mit dem Boden 14 in Eingriff stehenden Ringabschnitt 5a, 5b, 5c des Ringelementes 5 in Abhängigkeit von dem Eigengewicht der Bodenbearbeitungsvorrichtung 1 Druck auf den Ringabschnitt 5a, 5b, 5c ausgeübt, und zwar derart, dass der jeweilige Ringabschnitt 5a, 5b, 5c in radialer Richtung nach innen deformiert wird, solange der Bodeneingriff anhält. Wird der Bodeneingriff an dieser Stelle auf Grund der Rotation des Ringelementes aufgehoben bzw. kommt der anschließende Ringabschnitt 5a, 5b, 5c mit dem Boden in Eingriff, kehrt aufgrund der Nachgiebigkeit des geschlossenen Ringes der vorhergehende Ringabschnitt 5a, 5b, 5c wieder in seine Ausgangslage zurück, so dass die Umfangsfläche 5' des Ringelementes 5 vorzugsweise eine fortlaufende walkende Bewegung ausführt. Diese Bewegung bewirkt unter anderem, dass anhaftendes Erdreich und eventuelle Pflanzenrückstände sich von dem Ringelement 5 lösen und damit die Bodenbearbeitungsvorrichtung von sich aufbauendem Erdreich befreit wird.

Die Erfindung wurde voranstehend an einem Ausführungsbeispiel beschrieben. Es versteht sich, dass zahlreiche Modifikationen und Änderungen der Erfindung möglich sind, ohne dass hierdurch der Erfindungsgedanke verlassen wird.

### Bezugszeichenliste

- 1: Bodenbearbeitungsvorrichtung
- 2: Trägerrahmenanordnung
- 2': Längsträger
- 2": Querträger
- 3, 3': Nabenrohr
- 4: Bodenbearbeitungswerkzeug
- 5: Ringelement
- 5': Umfangsfläche
- 5": Innenfläche
- 5a: erster Ringabschnitt
- 5b: zweiter Ringabschnitt
- 5c: dritter Ringabschnitt
- 6: erste Speiche
- 6': inneres radiales Ende
- 6": äußeres radiales Ende
- 7: zweite Speiche
- 7': inneres radiales Ende
- 7": äußeres radiales Ende
- 8: dritte Speiche
- 8': inneres radiales Ende
- 8": äußeres radiales Ende
- 9: Anschlussflansch
- 10: Schraubverbindung
- 11: Führungshülse
- 11', 11": freie Enden der Führungshülse
- 12: Innenfläche der Führungshülse
- 13: Außenfläche des Nabenrohres
- 14: Boden
- L: Drehachse
- FR: Fahrtrichtung
- E: Ringelementebene
- D: Durchmesser
- B: Breite
- S: Stärke
- NLA: Nabenrohrlängsachse
- LH: Hülsenlänge

## Patentansprüche

1. Walzenförmige Vorrichtung zur Bodenbearbeitung umfassend zumindest eine Trägerrahmenanordnung (2), an der zumindest ein horizontal verlaufendes Nabenrohr (3) drehbar angeordnet ist, bei der auf dem Nabenrohr (3) mehrere mit dem Nabenrohr (3) rotierende Bodenbearbeitungswerkzeuge (4) vorzugsweise jeweils parallel zueinander angeordnet sind, wobei ein Bodenbearbeitungswerkzeug (4) durch ein geschlossenes, zumindest in einer Ringelementebene (E) deformierbar ausgebildetes Ringelement (5) mit kontinuierlicher Umfangsfläche (5') gebildet ist, wobei das Ringelement (5) aus einem vorzugsweise flachen Federmetallstreifen hergestellt ist, **dadurch gekennzeichnet, dass** jeweils ein Ringelement (5) über zwei oder drei Speichen (6, 7, 8) mit einem inneren und äußeren radialen Ende (6', 7', 8', 6", 7", 8") mit dem Nabenrohr (3) verbunden ist, wobei zumindest das radial äußere Ende (6", 7", 8") einer Speiche (6, 7, 8) starr mit dem Ringelement (5) mittels einer Schraub- und/oder Laschenverbindung (9, 10) verbunden ist.

2. Vorrichtung nach Anspruch 1, **dadurch gekennzeichnet, dass** das radial innere freie Ende (6', 7', 8') einer Speiche (6, 7, 8) starr mit dem Nabenrohr (3) verbunden sind.

3. Vorrichtung nach Anspruch 1, **dadurch gekennzeichnet, dass** das radial innere freie Ende (6', 7', 8') einer Speiche (6, 7, 8) starr mit einer länglichen Führungshülse (11) verbunden ist, welche das Nabenrohr (3) umschließt.

4. Vorrichtung nach Anspruch 3, **dadurch gekennzeichnet, dass** die Führungshülse (11) horizontal verschiebbar auf dem Nabenrohr (3) angeordnet ist.

5. Vorrichtung nach Anspruch 3 oder 4, **dadurch gekennzeichnet, dass** die längliche Führungshülse (11) mit dem Nabenrohr (3) derart verbunden ist, dass die längliche Führungshülse (11) entlang der Längsachse (NLA) das Nabenrohres (3) verschiebbar ist, jedoch ein axiales Verdrehen der Führungshülse (11) um die Nabenrohrlängsachse (N LA) gesperrt ist.

6. Vorrichtung nach Anspruch 1, **dadurch gekennzeichnet, dass** die freie Enden (5.1, 5.2) des Ringelementes (5) zumindest teilweise überlappen und mittels einer Schraubverbindung (10) miteinander verbunden sind.

7. Vorrichtung nach einem der vorhergehenden Ansprüche, **dadurch gekennzeichnet, dass** das Ringelement (5) durch die zwei oder drei Speichen (6, 7, 8) in mehrere Ringelementabschnitte (5a, 5b, 5c) geteilt wird, die quer zur Ringelementebene (E) radial auslenkbar sind.

8. Vorrichtung nach einem der vorhergehenden Ansprüche, **dadurch gekennzeichnet, dass** die zwei oder drei Speichen (6, 7, 8) eines Ringelementes (5) jeweils denselben Winkelabstand zueinander aufweisen.

9. Vorrichtung nach einem der vorhergehenden Ansprüche, **dadurch gekennzeichnet, dass** zumindest zwei auf einem Nabenrohr (3) angeordnete Ringelemente (5) eine unterschiedliche Anzahl an Speichen (6, 7, 8) aufweisen.

10. Vorrichtung nach einem der vorhergehenden Ansprüche, **dadurch gekennzeichnet, dass** der Durchmesser (D) der Ringelemente (5) abhängig von der Anzahl der Speichen (6, 7, 8) gewählt ist, und zwar vorzugsweise im Bereich von 350 mm bis 1000 mm.

11. Vorrichtung nach einem der vorhergehenden Ansprüche, **dadurch gekennzeichnet, dass** das die Speichen (6, 7, 8) die gleiche oder eine unterschiedliche radiale Länge aufweisen.

12. Vorrichtung nach einem der vorhergehenden Ansprüche, **dadurch gekennzeichnet, dass** das Ringelement (5) einen vorzugsweise massiven rechteckförmigen, ellipsenförmigen, ovalen, dachförmigen oder T-förmigen Querschnitt aufweist.

## Claims

1. A roller-shaped device for soil cultivation, comprising at least one support frame arrangement (2) to which at least one horizontally extending hub tube (3) is attached in rotatable manner, in which preferably parallel with each other a plurality of soil cultivation tools (4) is arranged on the hub tube (3) and rotates together with the hub tube (3), wherein one soil cultivation tool (4) is configured to be a closed ring element (5) that is deformable in at least one plane (E) of the ring element and has a continuous circumferential surface (5'), wherein the ring element (5) is made from a preferably flat strip of spring metal, **characterised in that** each ring element (5) is connected to the hub tube (3) via two or three spokes (6, 7, 8) comprising radially inner and outer ends (6', 7', 8', 6", 7", 8"), wherein at least the radially outer end (6", 7", 8") of a spoke (6, 7, 8) is rigidly attached to the ring element (5) by means of a screw and/or fish plate joint (9, 10).

2. The device according to claim 1, **characterised in that** the radially inner free end (6', 7', 8') of a spoke (6, 7, 8) is rigidly attached to the hub tube (3).

3. The device according to claim 1, **characterised in that** the radially inner free end (6', 7', 8') of a spoke (6, 7, 8) is rigidly attached to an elongated guide sleeve (11) surrounding the hub tube (3).

4. The device according to claim 3, **characterised in that** the guide sleeve (11) is arranged on the hub tube (3) in horizontally slidabe manner.

5. The device according to claim 3 or 4, **characterised in that** the elongated guide sleeve (11) is connected to the hub tube (3) in such manner that the elongated guide sleeve (11) is slidable along the lengthwise axis (NLA) of the hub tube (3) but an axial rotation of the elongated guide sleeve (11) around the lengthwise axis (NLA) of the hub tube (3) is blocked.

6. The device according to claim 1, **characterised in that** the free ends (5.1, 5.2) of the ring element (5) overlap at least partially and are joined to each other by means of a screw connection (10).

7. The device according to any of the preceding claims, **characterised in that** the ring element (5) is divided into several ring element sections (5a, 5b, 5c) by the two or three spokes (6, 7, 8), which can be radially deflected transversely with respect to the plane (E) of the ring element.

8. The device according to any of the preceding claims, **characterised in that** the two or three spokes (6, 7, 8) of a ring element (5) are aligned with the same angular distance with respect to each other.

9. The device according to any of the preceding claims, **characterised in that** at least two ring elements (5) arranged on a hub tube (3) comprise a different number of spokes (6, 7, 8).

10. The device according to any of the preceding claims, **characterised in that** the selection of the diameter (D) of the ring elements (5) is selected depending on the number of spokes (6, 7, 8), and is preferably in the range from 350 mm to 1000 mm.

11. The device according to any of the preceding claims, **characterised in that** the spokes (6, 7, 8) have the same or different radial lengths.

12. The device according to any of the preceding claims, **characterised in that** the ring element (5) has a preferably solid, rectangular, elliptical, oval, V-shaped or T-shaped cross section.

## Revendications

1. Dispositif en forme de cylindre pour le traitement du sol comprenant au moins un agencement de cadre porteur (2) sur lequel est disposé de manière pivotable au moins un tube de moyeu (3) passant à l'horizontal pour lequel plusieurs outils de traitement du sol (4) tournant avec le tube de moyeu (3) sont disposés sur le tube de moyeu (3), de préférence à chaque fois parallèles l'un par rapport à l'autre, dans lequel un outil de traitement du sol (4) est formé par un élément annulaire (5) avec une surface périphérique (5') continue, fermé, constitué de façon déformable au moins dans un plan d'élément annulaire (E), dans lequel l'élément annulaire (5) est fabriqué à partir d'une bande métallique à ressort de préférence plate **caractérisé en ce qu'**à chaque fois un élément annulaire (5) est relié au tube de moyeu (3) par deux ou trois rayons (6, 7, 8) avec une extrémité radiale intérieure et extérieure (6', 7', 8', 6", 7", 8"), dans lequel au moins l'extrémité (6", 7", 8") extérieure dans le sens radial d'un rayon (6, 7, 8) est raccordée à l'élément annulaire (5) de façon rigide au moyen d'un assemblage à vis et/ou à couvre-joint (9, 10).

2. Dispositif selon la revendication 1, **caractérisé en ce que** l'extrémité libre intérieure dans le sens radial (6', 7', 8') d'un rayon (6, 7, 8) est raccordée de façon rigide au tube de moyeu (3).

3. Dispositif selon la revendication 1, **caractérisé en ce que** l'extrémité libre intérieure dans le sens radial (6', 7', 8') d'un rayon (6, 7, 8) est raccordée de façon rigide à un manchon de guidage (11) longitudinal, qui entoure le tube de moyeu (3).

4. Dispositif selon la revendication 3, **caractérisé en ce que** le manchon de guidage (11) est disposé de manière à pouvoir être déplacé horizontalement sur le tube de moyeu (3).

5. Dispositif selon la revendication 3 ou 4, **caractérisé en ce que** le manchon de guidage (11) longitudinal est raccordé au tube de moyeu (3) de telle sorte que le manchon de guidage (11) longitudinal peut être mobile le long de l'axe longitudinal (NLA), une torsion axiale du manchon de guidage (11) autour de l'axe longitudinal (NLA) du tube de moyeu (3) étant toutefois bloquée.

6. Dispositif selon la revendication 1, **caractérisé en ce que** les extrémités libres (5.1, 5.2) de l'élément annulaire (5) se chevauchent au moins en partie et sont raccordées entre elles au moyen d'un assemblage à vis (10).

7. Dispositif selon l'une quelconque des revendications précédentes, **caractérisé en ce que** l'élément annulaire (5) est divisé en plusieurs sections d'élément annuaire (5a, 5b, 5c) par les deux ou trois rayons (6, 7, 8) qui peuvent être orientés dans le sens radial transversalement au plan d'élément annulaire (E).

8. Dispositif selon l'une quelconque des revendications précédentes, **caractérisé en ce que** les deux ou trois rayons (6, 7, 8) d'une élément annulaire (5) présentent respectivement la même distance angulaire l'un par rapport à l'autre.

9. Dispositif selon l'une quelconque des revendications précédentes, **caractérisé en ce qu'**au moins deux éléments annulaires (5) disposés sur un tube de moyeu (3) présentent un nombre différents de rayons (6, 7, 8).

10. Dispositif selon l'une quelconque des revendications précédentes, **caractérisé en ce que** le diamètre (D) des éléments annulaires (5) est choisi en fonction du nombre de rayons (6, 7, 8) et à savoir de préférence dans une gamme se situant de 350 mm à 1000 mm.

11. Dispositif selon l'une quelconque des revendications précédentes, **caractérisé en ce que** les rayons (6, 7, 8) présentent la même longueur radiale ou une longueur radiale différente.

12. Dispositif selon l'une quelconque des revendications précédentes, **caractérisé en ce que** l'élément annulaire (5) présente une section de préférence massive rectangulaire, elliptiques, ovale, en forme de toit ou de T.
